# EUROPEAN PATENT SPECIFICATION

(11) **EP 3 760 051 B1**
(45) Date of publication and mention of the grant of the patent: **20.11.2024**
(21) Application number: 19761298.9
(22) Date of filing: 27.02.2019
(51) Int. Cl.: A23G 9/00, A23G 9/34, A23G 9/32, A23G 9/42, A23G 9/38

(54) **COMPOSITION FOR FROZEN DESSERT**
ZUSAMMENSETZUNG FÜR GEFRORENE SÜSSSPEISE
COMPOSITION POUR DESSERT GLACÉ

(30) Priority: 28.02.2018 JP 2018035453
(43) Date of publication of application: 06.01.2021
(73) Proprietor: Otsuka Pharmaceutical Co., Ltd., Tokyo 101-8535 (JP)
(72) Inventor: MOCHIZUKI, Shogo, Osaka-shi, Osaka 540-0021 (JP); SATO, Takashi, Osaka-shi, Osaka 540-0021 (JP); HASEGAWA, Hiroshi, Higashihiroshima-shi, Hiroshima 739-8524 (JP)
(74) Representative: Hoffmann Eitle
(86) International application number: PCT/JP2019/007478
(87) International publication number: WO 2019/168002

(56) References cited:
- WO-A1-2010/146392
- WO-A1-2011/045130
- JP-A- 2013 503 156
- JP-A- 2015 109 841
- US-A1- 2003 031 758
- US-A1- 2009 035 418
- US-A1- 2013 078 353
- US-A1- 2013 273 227
- US-A1- 2014 050 810
- SUZUKI MASATO: "Efficacy,effect,and action of new cosmetic materials", 2.0.7 BETAINE, 1998, pages 226 - 228, XP009522903, ISBN: 4-88231-219-0

## Description

### TECHNICAL FIELD

This application claims the benefit of priority of Japanese Patent Application No. 2018-035453.

The disclosure relates to a frozen dessert composition and a method of manufacturing it.

### BACKGROUND

Consumers drink sports drinks for intake of water and electrolytes mainly in summer or during physical labor or exercise. Some consumers freeze sports drinks to feel cool especially in summer. However, the manufacturers do not recommend it. If a beverage packed in a container such as a typical PET bottle is frozen, the increased volume of the beverage may damage the container and the concentrations of the components become uneven during thawing.

Various frozen desserts are manufactured and sold today and frozen desserts that provide new tastes and textures are attracting the interests of consumers. As stated above, there is a demand for frozen desserts that can provide effects of sports drinks such as hydration. Consumers will favorably accept such frozen desserts, especially those having a novel texture.

Generally, frozen desserts have to be transported and stored at a low temperature and require higher distribution costs than other foods. Some frozen desserts that can be distributed at room temperatures are known (Patent Literatures 1 to 4). An example is a beverage packed in a cylindrical plastic container. Consumers freeze it at home or elsewhere, and suck the beverage from the container with thawing it. Another example is a sherbet-like beverage packed in a flexible container. Consumers freeze it and drink it with rubbing the container.

JP 2015-109841 (A) describes a syrup that includes a trehalulose-containing composition with a trehalulose content of 20 to 78 wt.%, an isomaltulose content of 20 to 50 wt.%, and a glucose content of 0.1 to 2.0 wt.% (each based on dry weight). A food product and a pharmaceutical composition containing the syrup also are described.

WO 2011/045130 A1 describes a "tooth-friendly" ice cream, milk ice, frozen yoghurt, yoghurt, yoghurt drink, milk shake or milk tea food product comprising: 0.1 to 5 wt% of an insoluble calcium salt; less than 1 wt% sucrose; less than 14 wt% of fructose, lactose, dextrose, maltodextrins and com syrups; and from 6 to 15 wt% of isomaltulose and/or trehalose.

US 2009/0035418 A1 describes an ice confection comprising from 11 to 30% (by weight of the confection) of glucose syrup solids having a dextrose equivalent (DE) of less than 20, and from 3 to 16 wt % low molecular weight sweeteners.

### REFERENCES

### PATENT LITERATURE

[Patent Literature 1] JP-A-2002-27917
[Patent Literature 2] JP-A-2010-17163
[Patent Literature 3] JP-A-2015-159790
[Patent Literature 4] JP-A-2016-202045

### SUMMARY

An object of the disclosure is to provide a frozen dessert composition.

The inventors have found that a good taste and texture is achieved by freezing and moderately thawing a frozen dessert composition comprising certain components.

Accordingly, an aspect of the disclosure provides a frozen dessert composition comprising
(A) about 6 to 15% by weight of palatinose based on the total weight of the composition; and
(B) about 10 to 30% by weight of a dextrin or a combination of a dextrin and a soluble dietary fiber based on the total weight of the composition.

Another aspect of the disclosure provides a method of manufacturing a frozen dessert composition comprising mixing the following components with water;
(A) about 6 to 15% by weight of palatinose based on the total weight of the composition; and
(B) about 10 to 30% by weight of a dextrin or a combination of a dextrin and a soluble dietary fiber based on the total weight of the composition.

The disclosure provides a composition which can be distributed at room temperatures and eaten as a frozen dessert having a good taste and texture.

### DETAILED DESCRIPTION

When a numerical value is accompanied with the term "about", the value is intended to represent any value in the range of -10% of the value to +10% of the value. For example, "about 20" means "a value from 18 to 22." A range defined with a value of the lower limit and a value of the upper limit covers all values from the lower limit to the upper limit, including the values of the both limits. When a range is accompanied with the term "about", the both limits are read as accompanied with the term. For example, "about 20 to 30" is read as "18 to 33."

Unless otherwise defined, the terms used herein are read as generally understood by a skilled person in the technical field of food manufacturing, distributing, and marketing. Several terms used herein are defined as described below. The definitions herein take precedence over the general understanding.

Palatinose, also called isomaltulose, is a disaccharide composed of glucose and fructose. Unlike sucrose, palatinose has an α-1,6 glucoside bond. Palatinose has a sweetness of about 40% of that of sucrose, and is used as a low-cariogenic sweetener. Since palatinose is absorbed more slowly than sucrose, it does not cause a sharp rise in the blood glucose level and does not greatly change the blood insulin level. Any palatinose that can be used for foods may be used herein. For example, commercially available palatinose may be used. The concentration of palatinose in the frozen dessert composition is about 6 to 15% by weight, preferably about 7 to 14% by weight, more preferably about 8 to 14% by weight, based on the total weight of the composition. The lower limit of the palatinose concentration in the frozen dessert composition is, for example, 6, 7, 8, 9, 10, or 11% by weight, and the upper limit is, for example, 12, 13, 14, or 15% by weight. A preferred range of the concentration may be determined by selecting any one of the values of the lower limit and any one of the values of the upper limit. A part of component (A), e.g., about 0.1 to 90% by weight, may be replaced by a disaccharide which has a sweetness and absorption rate equivalent to those of palatinose, such as palatinit and/or trehalose.

The composition comprises component (B) a dextrin or a combination of a dextrin and a soluble dietary fiber. In other words, component (B) may be a dextrin alone or may comprise a soluble dietary fiber in addition to a dextrin. Dextrins and soluble dietary fibers are carbohydrates which do not cause a sharp rise in the blood glucose level and are not too sweet.

Dextrins are low molecular weight carbohydrates obtained by hydrolysis of starch or glycogen. They are composed of α-glucose molecules polymerized via α-1,4 or α-1,6 bonds. Any dextrin that can be used for foods may be used herein. For example, commercially available dextrins may be used. In an embodiment, a maltodextrin, which is a dextrin having a dextrose equivalence (DE) of 20 or less, is used.

Dietary fibers are indigestible polysaccharides or lignins that are contained in foods and are not hydrolyzed with human digestive enzymes. Dietary fibers are roughly classified into soluble dietary fibers and insoluble dietary fibers according to the solubility in water, and the former is used herein. Any soluble dietary fiber that can be used for foods may be used herein. For example, commercially available soluble dietary fibers may be used. Examples of the soluble dietary fibers include indigestible dextrins, e.g., reduced indigestible dextrins, polydextroses, barley beta glucans, and combinations thereof. In an embodiment, an indigestible dextrin is used. In an embodiment, a reduced indigestible dextrin is used. Reduced indigestible dextrins, like dextrins, are composed of polymerized α-glucose molecules, but comprise at least one α-1,2 or α-1,3 bond in addition to α-1,4 or α-1,6 bonds.

The concentration of component (B) in the frozen dessert composition is about 10 to 30% by weight, preferably about 10 to 28% by weight, more preferably about 12 to 25% by weight, even more preferably about 13 to 23% by weight, based on the total weight of the composition. The lower limit of the concentration of component (B) in the frozen dessert composition is, for example, 10, 10.5, 11, 11.5, 12, 12.5, or 13% by weight, and the upper limit is, for example, 23, 23.5, 24, 24.5, 25, 25.5, 26, 26.5, 27, 27.5, 28, 29, or 30% by weight. A preferred range of the concentration may be determined by selecting any one of the values of the lower limit and any one of the values of the upper limit.

When component (B) is a dextrin alone, the concentration of component (B) is about 10 to 30% by weight, preferably about 10 to 20% by weight, more preferably about 12 to 18% by weight, even more preferably about 14 to 16% by weight, based on the total weight of the composition. When component (B) is a dextrin alone, the lower limit of the concentration of component (B) is, for example, 10, 11, 12, 13, or 14% by weight, and the upper limit is, for example, 16, 17, 18, 19, or 20% by weight. A preferred range of the concentration may be determined by selecting any one of the values of the lower limit and any one of the values of the upper limit.

When component (B) is a combination of a dextrin and a soluble dietary fiber, the percentage of the dextrin in the total weight of component (B) is, for example, about 1 to 99% by weight, about 10 to 90% by weight, about 20 to 80% by weight, about 40 to 75% by weight, about 50 to 70% by weight, about 55 to 65% by weight, or about 60 to 65% by weight. The lower limit of the percentage of the dextrin in the total weight of component (B) is, for example, 1, 10, 15, 20, 25, 30, 35, 40, 45, 50, 55, 56, 57, 58, 59, or 60% by weight, and the upper limit is, for example, 65, 66, 67, 68, 69, 70, 75, 80, 85, 90, 95, or 99% by weight. A preferred range of the percentage may be determined by selecting any one of the values of the lower limit and any one of the values of the upper limit.

The frozen dessert composition may further comprise an amino acid. Any amino acid that can be used for foods may be used herein. For example, commercially available amino acids may be used. Amino acids having a molecular weight of about 70 to 150 is preferred. Examples of the amino acids include betaine, glycine, alanine, glutamine, and proline. In an embodiment, betaine is used. The concentration of the amino acid in the frozen dessert composition may be about 0.1 to 10% by weight, preferably about 0.5 to 5% by weight, more preferably about 0.5 to 4% by weight, even more preferably about 1.5 to 3.0% by weight, based on the total weight of the composition. The lower limit of the concentration of the amino acid in the frozen dessert composition is, for example, 0.1, 0.5, 1, or 1.5 % by weight, and the upper limit is, for example, 3.0, 3.5, 4, 4.5, 5, or 10% by weight. A preferred range of the concentration may be determined by selecting any one of the values of the lower limit and any one of the values of the upper limit.

The frozen dessert composition may further comprise a sugar alcohol. Any sugar alcohol that can be used for foods may be used herein. For example, commercially available sugar alcohols may be used. Sugar alcohols having a molecular weight of about 70 to 150 is preferred. An Example of the sugar alcohols is glycerol. The concentration of the sugar alcohol in the frozen dessert composition may be about 0.1 to 10% by weight, preferably about 0.5 to 5% by weight, more preferably about 0.5 to 4% by weight, even more preferably about 1.5 to 3.0% by weight, based on the total weight of the composition. The lower limit of the concentration of the sugar alcohol in the frozen dessert composition is, for example, 0.1, 0.5, 1, or 1.5 % by weight, and the upper limit is, for example, 3.0, 3.5, 4, 4.5, 5, or 10% by weight. A preferred range of the concentration may be determined by selecting any one of the values of the lower limit and any one of the values of the upper limit.

The frozen dessert composition may further comprise a polysaccharide thickener. Any polysaccharide thickener that can be used for foods may be used herein. For example, commercially available polysaccharide thickeners may be used. Examples of the polysaccharide thickeners include pectin, carrageenan, guar gum, locust bean gum, tamarind gum, xanthan gum, curdlan, carboxymethylcellulose and combinations thereof. The concentration of the polysaccharide thickener in the frozen dessert composition may be about 0.01 to 1% by weight, preferably about 0.05 to 0.5% by weight, more preferably about 0.05 to 0.2% by weight, based on the total weight of the composition.

The frozen dessert composition may further comprise an additive, such as a fruit juice, a flavoring agent, an acidulant, a sweetener, a pigment, a preservative, or an antioxidant, in order to improve a property of the composition, such as flavor, appearance, or storability. Furthermore, the composition may comprise an electrolyte that is generally contained in sports drinks, for example, a sodium salt such as sodium chloride, a potassium salt such as potassium chloride, a calcium salt such as calcium lactate, or a magnesium salt such as magnesium chloride.

The method of manufacturing the frozen dessert composition is not particularly limited. For example, the composition may be manufactured by mixing the components with water. All components may be simultaneously added and mixed, or each component may be sequentially added and mixed. The frozen dessert composition may be manufactured at any temperature, for example, a room temperature, and if necessary, a heating and/or cooling step may be employed.

The frozen dessert composition may be packed in a container. Any container which can be closed and has been conventionally used for beverages or frozen desserts may be used. Examples of the containers include soft packaging containers, e.g., aluminum laminated films, plastic bottles, e.g., polyethylene terephthalate (PET), polyethylene (PE), and polypropylene (PP) bottles, glass bottles, aluminum cans, steel cans, and paper packs. A preferred container is a flexible container in the form of a bag, for example, a pouch container. A container that can be sealed is preferred. For example, a pouch container having a sealed opening which allows to eat or drink the contents by cutting off the end of the opening, or a pouch container having an opening with a cap, i.e., a spout pouch, may be used.

The frozen dessert composition may be sterilized before or after packing it into a container. The method of sterilization is not particularly limited, including conventional methods such as retort sterilization, batch sterilization, plate sterilization, and autoclave sterilization.

The frozen dessert composition can be distributed at room temperatures. The frozen dessert composition is intended to be served as a frozen dessert or an ice-based dessert after cooling. Consumers eat the frozen dessert composition after sufficiently cooling it in a freezer at a store, home, or elsewhere. For example, the composition is kept at a temperature of about -22°C to -18°C at least for 4 hours. The cooled composition is placed at a room temperature, the container may be rubbed if necessary, and the composition is eaten as a frozen dessert. The frozen dessert is not too hard even after freezing. Consumers can feel moderate softness and sweetness upon eating it, and can feel a unique smooth texture while it melts in the mouth.

The hardness of the frozen dessert composition may be determined using the breaking strength as the measure. For the purposes of the disclosure, the breaking strength is measured after placing 30 g of the composition at about -20°C for 24 hours and then at about 20°C for 1 minute. The frozen dessert composition has a breaking strength less than about 35 N, preferably less than about 31 N, more preferably less than about 25 N, and even more preferably less than about 20 N. The breaking strength may be measured with a texture analyzer such as CREEP METER RE2-33005C (YAMADEN co., ltd.).

Without limited by any theory, the described effects may be brought by freezing point depression in virtue of the solutes. A large amount of solutes is usually required to lower the freezing point, which may lead to excessive intake of salts and sugars. The frozen dessert composition achieves the freezing point depression using carbohydrate components that are not too sweet and do not cause a sharp rise in the blood glucose level, preferred in view of preventing lifestyle diseases.

The following examples do not restrict or limit the invention. The embodiments described above are non-limiting and may be modified without deviating from the scope of the invention as defined by the appended claims.

### EXAMPLES

The ingredients listed in Table 1, the ingredients listed in Table 2, and water were mixed to prepare Examples 1 to 6 and Comparative Examples 1 to 4 of the frozen dessert composition. The ingredients listed in Table 2 are common to all compositions. The amount of water was adjusted so that the total weight of the composition was 100 g.

**[Table 1-1]**

| Ingredient (g) | Ex. 1 | Ex. 2 | Ex. 3 | Ex. 4 | Ex. 5 | Ex. 6 |
|---|---|---|---|---|---|---|
| palatinose | 12 | 11 | 9 | 9 | 12 | 7 |
| maltodextrin | 9 | 9 | 15 | 4.5 | 15 | 21 |
| reduced indigestible dextrin | 5.5 | 5.5 | 5.5 | 16 | - | 5.5 |
| betaine | 2.5 | 2 | 2 | 2 | 2 | 2 |
| polysaccharide thickener | 0.1 | - | - | - | - | - |

**[Table 1-2]**

| Ingredient (g) | Comp. 1 | Comp. 2 | Comp. 3 | Comp. 4 |
|---|---|---|---|---|
| palatinose | - | 12 | 5 | 13 |
| maltodextrin | 15 | - | 27 | 3 |
| reduced indigestible dextrin | 10 | 15 | 5.5 | 5.5 |
| betaine | 2 | 2 | 2 | 2 |
| polysaccharide thickener | - | - | - | - |

**[Table 2]**

| Ingredient | amount (g) |
|---|---|
| fruit juice | appropriate |
| flavoring agent | appropriate |
| acidulant | appropriate |
| pigment | appropriate |
| sweetener | <0.1 |
| sodium chloride | appropriate |
| potassium chloride | appropriate |
| calcium lactate | appropriate |
| magnesium chloride | appropriate |
| antioxidant | appropriate |

### Physical property testing

Into a metal cup 30 g of each composition of Examples 1 to 6 and Comparative Examples 1 to 4 was poured and the cups were placed in a freezer at about -20°C for 24 hours for freezing. One minute after taking the cups out from the freezer, the breaking strengths of the compositions were measured by a texture analyzer (CREEP METER RE2-33005C (YAMADEN co., ltd.)) (n=6). The results are shown in Table 3.

**[Table 3]**

| | Mean (N) | SD |
|---|---|---|
| Ex. 1 | 16 | 2.3 |
| Ex. 2 | 31 | 5.4 |
| Ex. 3 | 23 | 5.2 |
| Ex. 4 | 27 | 4.7 |
| Ex. 5 | 21 | 3.1 |
| Ex. 6 | 13 | 2.6 |
| Comp. 1 | 26 | 3.7 |
| Comp. 2 | 46 | 2.4 |
| Comp. 3 | 5 | 1.7 |
| Comp. 4 | 81 | 7.6 |

Average breaking strengths less than 35 N were determined allowable. The compositions of Examples 1 to 6 and Comparative Examples 1 and 3 had the allowable breaking strengths. The compositions of Comparative Examples 2 and 4 had higher breaking strengths, i.e., unallowable hardness.

### Sensory evaluation

The properties listed in Table 4 were evaluated in a sensory evaluation by three testers. One of scores 1 to 5 was assigned to each property. Regarding the sweetness, the best score was 3 and the range of allowable scores was determined. As for the other properties, the worst score was 1 and the best score was 5.

**[Table 4]**

| | 1 | 2 | 3 | 4 | 5 |
|---|---|---|---|---|---|
| physical property (hardness) | very hard | hard | neither | soft | very soft |
| texture | very bad | bad | neither | good | very good |
| melting in mouth | very bad | bad | neither | good | very good |
| sweetness | not sweet | less sweet | best | sweeter | too sweet |
| starchy texture | very strong | strong | neither | weak | very weak |
| aftertaste | very bad | bad | neither | good | very good |
| taste | very bad | bad | neither | good | very good |

The evaluations of the physical properties (hardness) are shown in Table 5.

**[Table 5]**

| | Tester A | Tester B | Tester C | Mean |
|---|---|---|---|---|
| Ex. 1 | 4 | 5 | 5 | 4.7 |
| Ex. 2 | 3 | 3 | 3 | 3.0 |
| Ex. 3 | 3 | 3 | 4 | 3.3 |
| Ex. 4 | 3 | 3 | 3 | 3.0 |
| Ex. 5 | 4 | 3 | 4 | 3.7 |
| Ex. 6 | 4 | 4 | 5 | 4.3 |
| Comp. 1 | 3 | 3 | 3 | 3.0 |
| Comp. 2 | 2 | 2 | 2 | 2.0 |
| Comp. 3 | 5 | 5 | 5 | 5.0 |
| Comp. 4 | 1 | 1 | 2 | 1.3 |

Regarding the hardness, average scores not less than 3.0 were determined allowable. The compositions of Examples 1 to 6 and Comparative Examples 1 and 3 had the allowable hardness. The compositions of Comparative Examples 2 and 4 had the unallowable hardness.

The evaluations of the textures are shown in Table 6.

**[Table 6]**

| | Tester A | Tester B | Tester C | Mean |
|---|---|---|---|---|
| Ex. 1 | 5 | 5 | 5 | 5.0 |
| Ex. 2 | 4 | 4 | 4 | 4.0 |
| Ex. 3 | 4 | 4 | 4 | 4.0 |
| Ex. 4 | 4 | 4 | 4 | 4.0 |
| Ex. 5 | 4 | 4 | 3 | 3.7 |
| Ex. 6 | 3 | 4 | 3 | 3.3 |
| Comp. 1 | 3 | 3 | 3 | 3.0 |
| Comp. 2 | 4 | 2 | 3 | 3.0 |
| Comp. 3 | 3 | 1 | 3 | 2.3 |
| Comp. 4 | 3 | 3 | 4 | 3.3 |

Regarding the textures, average scores not less than 3.0 were determined allowable. The compositions of Examples 1 to 6 and Comparative Examples 1, 2 and 4 had the allowable textures. The composition of Comparative Example 3 had the unallowable texture.

The evaluations of the melting in mouth are shown in Table 7.

**[Table 7]**

| | Tester A | Tester B | Tester C | Mean |
|---|---|---|---|---|
| Ex. 1 | 4 | 5 | 4 | 4.3 |
| Ex. 2 | 4 | 3 | 4 | 3.7 |
| Ex. 3 | 4 | 4 | 4 | 4.0 |
| Ex. 4 | 3 | 4 | 3 | 3.3 |
| Ex. 5 | 4 | 4 | 3 | 3.7 |
| Ex. 6 | 3 | 4 | 4 | 3.7 |
| Comp. 1 | 3 | 3 | 3 | 3.0 |
| Comp. 2 | 3 | 3 | 3 | 3.0 |
| Comp. 3 | 4 | 5 | 5 | 4.7 |
| Comp. 4 | 3 | 3 | 3 | 3.0 |

Regarding the melting in mouth, average scores not less than 3.0 were determined allowable. The compositions of Examples 1 to 6 and Comparative Examples 1 to 4 had the allowable melting in mouth.

The evaluations of the sweetness are shown in Table 8.

**[Table 8]**

| | Tester A | Tester B | Tester C | Mean |
|---|---|---|---|---|
| Ex. 1 | 3 | 3 | 3 | 3.0 |
| Ex. 2 | 2 | 3 | 2 | 2.3 |
| Ex. 3 | 3 | 3 | 3 | 3.0 |
| Ex. 4 | 4 | 4 | 3 | 3.7 |
| Ex. 5 | 4 | 4 | 4 | 4.0 |
| Ex. 6 | 4 | 5 | 4 | 4.3 |
| Comp. 1 | 3 | 2 | 3 | 2.7 |
| Comp. 2 | 1 | 2 | 1 | 1.3 |
| Comp. 3 | 5 | 5 | 5 | 5.0 |
| Comp. 4 | 2 | 1 | 2 | 1.7 |

Regarding the sweetness, average scores not less than 2.3 and not more than 4.3 were determined allowable. The compositions of Examples 1 to 6 and Comparative Example 1 had the allowable sweetness. The other compositions had the unallowable sweetness, since the compositions of Comparative Examples 2 and 4 were much less sweet and the composition of Comparative Example 3 was too sweet.

The evaluations of the starchy textures, i.e., powdery texture, are shown in Table 9.

**[Table 9]**

| | Tester A | Tester B | Tester C | Mean |
|---|---|---|---|---|
| Ex. 1 | 5 | 5 | 5 | 5.0 |
| Ex. 2 | 4 | 4 | 4 | 4.0 |
| Ex. 3 | 5 | 4 | 4 | 4.3 |
| Ex. 4 | 3 | 3 | 3 | 3.0 |
| Ex. 5 | 3 | 4 | 4 | 3.7 |
| Ex. 6 | 3 | 3 | 2 | 2.7 |
| Comp. 1 | 2 | 2 | 2 | 2.0 |
| Comp. 2 | 2 | 3 | 3 | 2.7 |
| Comp. 3 | 1 | 1 | 1 | 1.0 |
| Comp. 4 | 3 | 3 | 4 | 3.3 |

Regarding the starchy textures, average scores not less than 2.7 were determined allowable. The compositions of Examples 1 to 6 and Comparative Examples 2 and 4 had the allowable starchy textures. The compositions of Comparative Examples 1 and 3 had the unallowable starchy textures.

The evaluations of the aftertastes are shown in Table 10.

**[Table 10]**

| | Tester A | Tester B | Tester C | Mean |
|---|---|---|---|---|
| Ex. 1 | 5 | 5 | 4 | 4.7 |
| Ex. 2 | 4 | 4 | 4 | 4.0 |
| Ex. 3 | 5 | 4 | 4 | 4.3 |
| Ex. 4 | 3 | 4 | 4 | 3.7 |
| Ex. 5 | 3 | 4 | 4 | 3.7 |
| Ex. 6 | 3 | 3 | 2 | 2.7 |
| Comp. 1 | 3 | 3 | 2 | 2.7 |
| Comp. 2 | 2 | 1 | 3 | 2.0 |
| Comp. 3 | 1 | 1 | 1 | 1.0 |
| Comp. 4 | 2 | 3 | 4 | 3.0 |

Regarding the aftertastes, average scores not less than 2.7 were determined allowable. The compositions of Examples 1 to 6 and Comparative Examples 1 and 4 had the allowable aftertastes. The compositions of Comparative Examples 2 and 3 had the unallowable aftertastes.

The evaluations of the overall tastes are shown in Table 11.

**[Table 11]**

| | Tester A | Tester B | Tester C | Mean |
|---|---|---|---|---|
| Ex. 1 | 5 | 5 | 5 | 5.0 |
| Ex. 2 | 4 | 4 | 4 | 4.0 |
| Ex. 3 | 4 | 5 | 5 | 4.7 |
| Ex. 4 | 3 | 3 | 3 | 3.0 |
| Ex. 5 | 4 | 4 | 3 | 3.7 |
| Ex. 6 | 2 | 3 | 2 | 2.3 |
| Comp. 1 | 2 | 3 | 2 | 2.3 |
| Comp. 2 | 2 | 1 | 3 | 2.0 |
| Comp. 3 | 1 | 1 | 1 | 1.0 |
| Comp. 4 | 3 | 3 | 4 | 3.3 |

Regarding the tastes, average scores not less than 2.0 were determined allowable. The compositions of Examples 1 to 6 and Comparative Examples 1, 2, and 4 had the allowable tastes. The composition of Comparative Example 3 had the unallowable taste.

In conclusion, all evaluated properties of the compositions of Examples 1 to 6 were allowable. The compositions of Comparative Examples 1 to 4 had at least one unallowable property.

### INDUSTRIAL APPLICABILITY

Since the frozen dessert composition can be transported and stored at room temperatures, the distribution cost could be suppressed. In addition, the composition is expected to be favorably accepted by consumers because it gives a good taste and a novel unique texture simultaneously with supplying water and electrolytes.

## Claims

1. A frozen dessert composition, comprising
(A) about 6 to 15% by weight of palatinose based on the total weight of the composition; and
(B) about 10 to 30% by weight of a dextrin or a combination of a dextrin and a soluble dietary fiber based on the total weight of the composition.

2. The composition according to claim 1, wherein component (B) is the combination of a dextrin and a soluble dietary fiber.

3. The composition according to claim 2, wherein the percentage of the dextrin in the total weight of component (B) is about 10 to 90% by weight.

4. The composition according to any one of claims 1 to 3, wherein the dextrin is a maltodextrin.

5. The composition according to any one of claims 1 to 4, wherein the soluble dietary fiber is selected from the group consisting of indigestible dextrins, polydextroses, barley beta glucans, and combinations thereof.

6. The composition according to any one of claims 1 to 5, further comprising about 0.1 to 10% by weight of an amino acid based on the total weight of the composition.

7. The composition according to claim 6, wherein the amino acid is betaine.

8. The composition according to any one of claims 1 to 7, further comprising about 0.05 to 0.5% by weight of a polysaccharide thickener based on the total weight of the composition.

9. The composition according to any one of claims 1 to 8, which is packed in a container.

10. The composition according to any one of claims 1 to 9, which has a breaking strength less than 35 N.

11. A method of manufacturing a frozen dessert composition according to any one of claims 1 to 10, comprising mixing the following components with water;
(A) about 6 to 15% by weight of palatinose based on the total weight of the composition; and
(B) about 10 to 30% by weight of a dextrin or a combination of a dextrin and a soluble dietary fiber based on the total weight of the composition.

## Patentansprüche

1. Gefrorene Dessertzusammensetzung, umfassend
(A) etwa 6 bis 15 Gew.-% Palatinose, bezogen auf das Gesamtgewicht der Zusammensetzung; und
(B) etwa 10 bis 30 Gew.-% eines Dextrins oder einer Kombination aus einem Dextrin und einem löslichen Ballaststoff, bezogen auf das Gesamtgewicht der Zusammensetzung.

2. Zusammensetzung gemäß Anspruch 1, wobei die Komponente (B) eine Kombination aus einem Dextrin und einem löslichen Ballaststoff ist.

3. Zusammensetzung gemäß Anspruch 2, wobei der prozentuale Anteil des Dextrins am Gesamtgewicht der Komponente (B) etwa 10 bis 90 Gew.-% beträgt.

4. Zusammensetzung gemäß mindestens einem der Ansprüche 1 bis 3, wobei das Dextrin ein Maltodextrin ist.

5. Zusammensetzung gemäß mindestens einem der Ansprüche 1 bis 4, wobei der lösliche Ballaststoff ausgewählt ist aus einer Gruppe bestehend aus unverdaulichen Dextrinen, Polydextrosen, Beta-Glucanen aus Gerste und Kombinationen davon.

6. Zusammensetzung gemäß mindestens einem der Ansprüche 1 bis 5, ferner umfassend etwa 0,1 bis 10 Gew.-% einer Aminosäure, bezogen auf das Gesamtgewicht der Zusammensetzung.

7. Zusammensetzung gemäß Anspruch 6, wobei die Aminosäure Betain ist.

8. Zusammensetzung gemäß mindestens einem der Ansprüche 1 bis 7, ferner umfassend etwa 0,05 bis 0,5 Gew.-% eines Polysaccharid-Verdickungsmittels, bezogen auf das Gesamtgewicht der Zusammensetzung.

9. Zusammensetzung gemäß mindestens einem der Ansprüche 1 bis 8, die in einem Behälter verpackt ist.

10. Zusammensetzung gemäß mindestens einem der Ansprüche 1 bis 9, die eine Bruchfestigkeit von weniger als 35 N aufweist.

11. Verfahren zur Herstellung einer gefrorenen Dessertzusammensetzung gemäß mindestens einem der Ansprüche 1 bis 10, umfassend das Mischen der folgenden Komponenten mit Wasser;
(A) etwa 6 bis 15 Gew.-% Palatinose, bezogen auf das Gesamtgewicht der Zusammensetzung; und
(B) etwa 10 bis 30 Gew.-% eines Dextrins oder einer Kombination aus einem Dextrin und einem löslichen Ballaststoff, bezogen auf das Gesamtgewicht der Zusammensetzung.

## Revendications

1. Composition pour dessert glacé, comprenant
(A) environ 6 à 15 % en poids de palatinose par rapport au poids total de la composition ; et
(B) environ 10 à 30 % en poids d'une dextrine ou d'une combinaison d'une dextrine et d'une fibre alimentaire soluble par rapport au poids total de la composition.

2. Composition selon la revendication 1, dans laquelle le composant (B) est la combinaison d'une dextrine et d'une fibre alimentaire soluble.

3. Composition selon la revendication 2, dans laquelle le pourcentage de la dextrine dans le poids total du composant (B) est d'environ 10 à 90 % en poids.

4. Composition selon l'une quelconque des revendications 1 à 3, dans laquelle la dextrine est une maltodextrine.

5. Composition selon l'une quelconque des revendications 1 à 4, dans laquelle la fibre alimentaire soluble est choisie dans le groupe constitué par des dextrines non digestibles, des polydextroses, des bêta-glucanes d'orge, et des combinaisons de ceux-ci.

6. Composition selon l'une quelconque des revendications 1 à 5, comprenant en outre environ 0,1 à 10 % en poids d'un acide aminé par rapport au poids total de la composition.

7. Composition selon la revendication 6, dans laquelle l'acide aminé est la bétaïne.

8. Composition selon l'une quelconque des revendications 1 à 7, comprenant en outre environ 0,05 à 0,5 % en poids d'un épaississant polysaccharide par rapport au poids total de la composition.

9. Composition selon l'une quelconque des revendications 1 à 8, qui est emballée dans un récipient.

10. Composition selon l'une quelconque des revendications 1 à 9, qui présente une résistance à la rupture inférieure à 35 N.

11. Procédé de fabrication d'une composition pour dessert glacé selon l'une quelconque des revendications 1 à 10, comprenant le mélange des composants suivants avec de l'eau ;
(A) environ 6 à 15 % en poids de palatinose par rapport au poids total de la composition ; et
(B) environ 10 à 30 % en poids d'une dextrine ou d'une combinaison d'une dextrine et d'une fibre alimentaire soluble par rapport au poids total de la composition.
